# EUROPEAN PATENT APPLICATION

(11) **EP 2 600 510 A1**
(43) Date of publication of application: **05.06.2013**
(21) Application number: 11191407.3
(22) Date of filing: 30.11.2011
(51) Int. Cl.: H02M 1/32, H02M 7/49, H02J 3/18

(54) **Heating a converter with circulating currents**

(71) Applicant: ABB Technology AG, 8050 Zürich (CH)
(72) Inventor: Grinberg, Roman, 5415 Rieden (CH); Korn, Arthur, CH-5400 Baden (CH)
(74) Representative: ABB Patent Attorneys

(57) **Abstract**

A method for controlling an electrical converter 10 comprises the steps of: controlling the power modules 28 of the converter 10, such that an input current at an input 16 of the converter is converted into an output current 50 at an output of the converter 10; controlling the power modules 28 such that a circulating current 46 flowing through a converter branch 24 and returning through another converter branch 24 is generated without influencing the output current; determining a target temperature of the power modules 28 of a converter branch 24. The circulating current is controlled such that the power modules 28 of the converter branch are heated with the circulating current 46 to the target temperature.

## Description

### FIELD OF THE INVENTION

The invention relates to the field of modular multilevel converters. In particular, the invention relates to a method, a computer program and a computer-readable medium for controlling a converter as well as to a converter.

### BACKGROUND OF THE INVENTION

In a modular multilevel converter, each converter branch comprises a plurality of elementary cells connected in series. A large number of elementary cells may bring the advantage of very low distortion in output currents and voltages. However, at the same time, a large number of elementary cells may pose a reliability challenge, since the lifetime of the converter depends on the lifetime of each elementary cell.

The elementary cells of a converter may contain power modules. A typical IGBT, MOSFET or BJT power module may comprise chips (with semiconductor switches), an insulating substrate and a baseplate. Those parts may have different thermal expansion coefficients and thermal time constants. The baseplate usually has the highest thermal time constant, whereas the chip has the smallest one. A change of temperature may result in stresses in a solder layer between these parts that may manifest itself in cracks in the solder layer.

The largest temperature difference may occur when a power module goes from non-operating cold state (an idle state) to a full-power state. There are applications where a converter has to operate at full load for very short time periods and then stay idle for a much longer period of time. An example of such an application may be a variable speed drive with cyclic loads, where a process requires short full power and long standby operation modes. Another example may be a converter for wind application, where there are long no-wind periods.

As a result, the lifetime of the power module may be limited by the temperature difference during one temperature cycle (i.e. the transition from the idle state to the full-power state) and a number of temperature cycles. For example, this may be a problem in the deep water wind application where repair and maintenance may be limited and extremely expensive.

The number of cycles may be given by the application and may not be altered. However, the temperature variations may be reduced by increasing the module temperature during the idle state or during partial load states.

For example, resistive heaters inside or close to the heatsink of a power module may be used to raise the module temperature during the idle state. However, this may require external heating elements and a corresponding arrangement inside the converter. Furthermore, existing resistive elements in the converter with a different primary function may be used for heating. Such elements may be braking or capacitor voltage balancing resistors. However, the design and the selection of resistors may then be influenced not only by their primary function but also by their new additional function of heating. Such a usage may also impose constraints on the position of those elements which may contradict with the constraints imposed by their primary function.

In "New transformerless, scalable Modular Mutilevel Converters for HVDC-transmission" by Allebrod et. al., Power Electronics Specialists Conference, 2008. PESC 2008. IEEE, a M2LC converter and its circulating currents (internal arm currents) are described.

### DESCRIPTION OF THE INVENTION

It is an object of the invention to increase the lifetime of a converter.

This objective is achieved by the subject-matter of the independent claims. Further exemplary embodiments are evident from the dependent claims and the following description.

An aspect of the invention relates to a method for controlling an electrical converter.

According to an embodiment of the invention, the converter comprising at least two converter branches each connecting an input terminal of the converter with an output terminal of the converter. Each converter branch comprises a plurality of power modules connected in series. Each power module comprises at least two power semiconductor switches connected in series and a capacitor connected in parallel to the power semiconductor switches. In particular, the converter may be a modular multilevel converter.

The converter may be adapted for converting a DC current into an AC current, for converting an AC current into a DC current (i.e. an active rectifier) or for converting an AC current into an AC current. The converter may by an indirect converter with a DC link or may be a direct converter (without a DC link).

According to an embodiment of the invention, the method comprises the steps of: controlling the power modules, such that an input current at the input is converted into an output current at the output and such that a circulating current flowing through a converter branch and returning through another converter branch is generated without influencing the output current; determining a target temperature of the power modules of a converter branch, wherein the circulating current is controlled such that the power modules of the converter branch are heated with the circulating current to the target temperature.

In M2LC converters, in either direct or indirect topology, a circulating current may be generated and controlled in every converter branch. The circulating current may flow through a whole branch of the converter and may return through the other phases. The presence of a circulating current may result in extra losses in the power modules and other system parts, which usually generates heat. A circulating current may be controlled without disturbing the output waveforms of the converter.

Summarized, the converter may be heated by circulating currents that do not influence the output current of the converter and that generate heat in the power modules without the need for separate heating elements.

The circulating current may flow through one converter branch in the direction, a branch current (contributing to the output current) is flowing through the converter branch. The circulating current may return to one or more other converter branches flowing in an opposite direction to the respective branch current.

In this way, stresses in the power modules (which may result in cracks) may be reduced and the power module lifetime for a modular multilevel converter may be increased. The heat sink temperature of the power modules may be controlled in all loading and ambient temperature points.

The circulating currents generating heat in the power module may result in power conversion losses. However, at the expense of increased power conversion losses, power module, and consequently, converter lifetime may be increased.

According to an embodiment of the invention, the method further comprises the step of: estimating an actual temperature of the power modules of the converter branch. The circulating current may then be controlled such that the power modules of the converter branch are heated from the estimated temperature to the target temperature.

It may be possible that the power modules are heated, when the converter is in an idle state or in a transition to a normal operating state. In this case, the estimated temperature may be an environment temperature of the converter. For example, the target temperature may be a predefined temperature.

According to an embodiment of the invention, the actual temperature is estimated with a sensor in a power module. For example, a heat sink temperature sensor may be used for thermal feedback. Such a temperature sensor may already be present in a power module. Since all power modules may be equally designed, each of the power modules may comprise a temperature sensor.

According to an embodiment of the invention, an actual temperature of the power semiconductors is estimated based on a thermal model of the power modules. For example from the heat sink temperature and/or an ambient temperature, the temperature of the power semiconductors of a power module may be estimated. The model may be a power module and heat sink thermal impedance model.

According to an embodiment of the invention, an amplitude and/or an frequency of the circulating current is controlled. The circulating current may be a DC or AC current. Not only the amplitude of the circulating current but also its frequency may have influence on the heating of the power modules.

According to an embodiment of the invention, the power modules are heated in an idle state and/or between a transition of the converter from an idle state to a normal operation state (or full load state). The converter modules may be heated in the idle state and/or a loading state of the converter before the converter reaches a normal operation state, in which the converter may operate at full load.

Due to the heating, the temperature of the power modules may not fall far below the operation temperature and thus, the temperature variations may be reduced.

In particular without heating in an idle state the power modules may reach a low temperature, which may be the ambient temperature. On the other hand, in a full load state the power modules may reach maximal temperature. When the power modules are slowly heated or cooled during the transition between the states, the physical stress on the modules may be reduced.

In this case, the power modules may be heated more than 50° C (for example more than 100° C) during one heating cycle, i.e. from the beginning of the heating until the end of the heating.

The circulating current may be used to reduce the temperature variations during load cycling. By increasing the circulating current, the power module temperature may be increased during a low load state and/or a standby operation. Once the converter reaches the normal operation state, the circulating current may be reduced to avoid the temperature of the semiconductor chip exceeding a maximum design value.

According to an embodiment of the invention, the heating of the power modules is controlled in an operating state of the converter, such that temperature variations of an actual temperature of the power modules are smaller than a predefined temperature.

For example, the power modules may operate at a target temperature of 150° C at full load. When the actual temperature of the modules falls below 80°C (for example, when the converter is only operating on low load), the power modules may be heated with a circulating current. In such a way, the temperature variations may be reduced.

According to an embodiment of the invention, the method may further comprise the step of: controlling a cooling device of the converter based on the target temperature. The power modules may be cooled, when an actual temperature of the power modules is above the target temperature. The cooling capability of the cooling device may be reduced or the cooling device may be turned off, when the target temperature is higher than the actual temperature of the power modules, such that the cooling down of the power modules is slowed down.

The heating of the power modules with a circulating current may be combined with a cooling device or cooling mechanism of the converter. The actual temperature of the power modules may be measured with a temperature sensor. When the actual temperature is too high (i.e. higher than the target temperature), the power modules may be cooled with the cooling device. When the actual temperature is too low, the power modules may be heated with a circulating current and the cooling device may be turned off or its cooling capability may be reduced.

Such a cooling device may comprise a cooling fan, which fan air flow rate may be reduced for less cooling the power modules by means of for example throttling valves, bypass valves, a multi-speed motor or a variable frequency drive. The performance of the fan may be further controlled depending on an ambient temperature and a load level of the converter.

Such a cooling device may comprise a cooling pump equipped with means to reduce the coolant flow rate and in turn the cooling the power modules such as a bypass valve, a throttling valve, a multi-speed motor or a variable frequency drive. Such a cooling device may also comprise a heat exchanger equipped with means to reduce the heat transfer from one cooling circuit to the other and in turn the cooling the power modules such as a bypass valve in either of the cooling circuits. The performance of the cooling system may be further controlled depending on an ambient temperature and a load level of the converter.

A heating of power modules may be required at no-load and low ambient temperature conditions, where losses are very small. With only a cooling device, there may be a temperature range, where it is not possible to raise the temperature of the power modules anymore. In this case, the additional heating with controlled circulating currents, may help to even control the temperature of the power modules in this temperature range.

The control of the cooling device, for example the control of the flow rate of the cooling medium, may be combined with the control of the circulating currents.

Further aspects of the invention relate to a computer program for controlling a converter, which, when being executed by a processor, is adapted to carry out the steps of the method as described in the above and in the following, and a computer-readable medium in which such a computer program is stored.

A computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

A further aspect of the invention relates to a controller for a converter, which is adapted for carrying out the method as described in the above and in the following. For example, such a converter may comprise a processor and a nonvolatile storage medium on which a computer program as mentioned above is stored. However, it has to be understood that at least parts of the method may also be implemented in hardware.

A further aspect of the invention relates to an electrical converter for converting an input current into an output current as described in the above and the following, which may comprise a controller as described above.

It has to be understood that features of the method as described in the above and in the following may be features of the controller and the converter as described in the above and in the following and vice versa.

Summarized, the advantages of the proposed method and the proposed converter may be: The module temperature control may be independent on the load control. There may be no need for external or additional heating elements and corresponding circuitry. The method may be implemented on an existing hardware design only with software modifications (retrofitting). The method may be combined with controlled cooling.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a converter according to an embodiment of the invention.
Fig. 2 schematically shows a power module for the converter of Fig. 1.
Fig. 3 schematically shows a converter according to an embodiment of the invention.
Fig. 4 schematically shows a power module for the converter of Fig. 2.
Fig. 5 shows a diagram with circulating and branch currents according to an embodiment of the invention.
Fig. 6 shows a functional diagram of a controller according to an embodiment of the invention.
Fig. 7 shows a flow diagram for a method for controlling a converter according to an embodiment of the invention.

In principle, identical parts are provided with the same reference symbols in the figures.

### DETAILED DESCRIPTION OF EXEMPLARY EMBODIMENTS

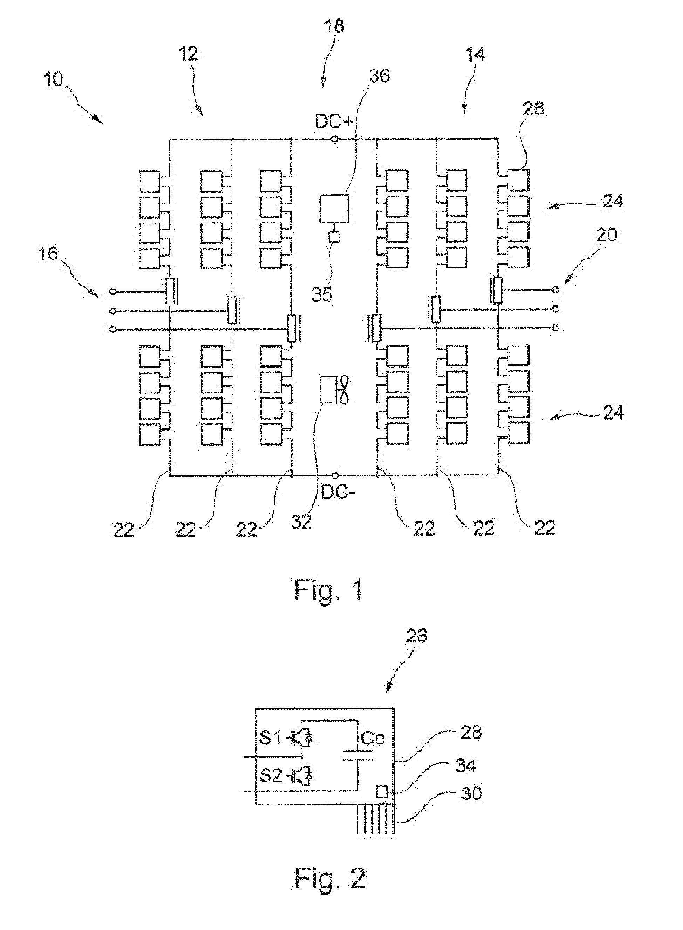

Topologies of modular multilevel converters (M2LC) are shown in Fig.1 to Fig. 4.

Fig.1 shows an indirect converter 10 with a rectifier section 12 and an inverter section 14. The rectifier section 12 is adapted for converting a three-phase AC current at the input 16 into a DC current in the DC link 18. The inverter section 14 is adapted for converting the DC current in the DC link 18 into a further three-phase AC current at the output 20.

The rectifier section 12 and the inverter section each have three phase units 22 that are connected in parallel to the DC link 18. Each phase unit comprises two branches 24 that are connected in series and are either connecting the input 16 (or the output 20) with the positive part of the DC link 18 or are connecting the input 16 (or the output 20) with the negative part of the DC link 18.

Each of the branches 24 (and therefore the phase units 22) comprises a plurality of converter cells or elementary cells 26.

Fig. 2 shows a power module 28 with a unipolar cell 26 for the converter 10 of Fig. 1. The unipolar cell 26 comprises two semiconductor switches, for example IGBTs, S1, S2 and a capacitor Cc. The semiconductor switches S1, S2 are connected in series and are connected in parallel with the capacitor Cc. One input of the power module 28 is connected between the two semiconductor switches S1, S2, the other one to the capacitor Cc. The unipolar cell 18 of Fig. 2 is adapted for generating voltages with one polarity.

The power module 28 further comprises a heat sink 30 that may be cooled with a cooling device 32 (see Fig. 1), for example a fan 32, of the converter 10.

A temperature sensor 34 is integrated into the power module 28 that is adapted for sensing the temperature of the power semiconductor switches S1, S2 and/or the heat sink 30.

Furthermore, an ambient temperature sensor 35 may sense or measure the ambient temperature of the converter 10.

It has to be noted that a power module 28 may comprise more than one elementary cell 26.

The converter 12 of Fig. 1 comprises a controller 36 for controlling the elementary cells 26, the power modules 28 and the cooling device 32. The controller 36 may comprise a programmable processor and a storage, in which control programs to be executed by the processor are stored.

It has to be noted that the sections 12, 14 of the converter 10 for converting an AC current into an AC current itself may be seen as converters. In particular, the DC link 18 may be seen as an output of the rectifier section 12, which itself is a converter 12 for converting an AC current into a DC current. Additionally, the DC link 18 may be seen as an input of the inverter section 14, which itself is a converter 14 for converting a DC current into an AC current.

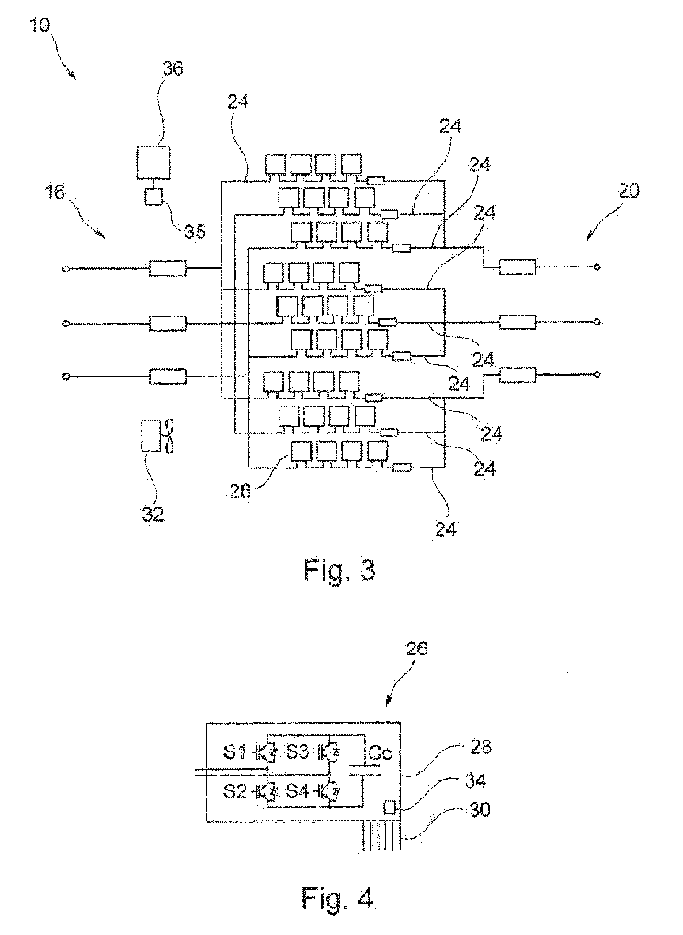

Fig. 3 shows a direct converter 10 with a different M2LC topology. The converter 10 is adapted for directly converting a three-phase AC current at the input 16 in a three-phase AC current at the output 18 without an intermediate DC link. The converter 10 comprises nine converter branches 24 for connecting each input phase with an output phase. Like the converter of Fig. 1, each of the converter branches 24 comprises a plurality of elementary cells 26 connected in series.

Fig. 4 shows a power module 28 with a bipolar cell 26 for the converter 10 of Fig. 3. The bipolar cell 26 comprises for semiconductor switches S1, S2, S3, S4 and a capacitor Cc. Two pairs S1, S2 and S3, S4 of semiconductor switches, which are connected in series, are connected in parallel with the capacitor Cc. One input of the power module 28 is connected between the two semiconductor switches S1, S2 of the first pair, the other one to between the two semiconductor switches of the second pair. The bipolar cell 18 of Fig. 4 is adapted for generating voltages with two polarities.

In such a way, the output current of a branch and the respective phase current of the converter may be controlled.

Furthermore, in M2LC converters 10 also circulating currents are present and may be controlled. This is explained with respect to Fig. 4.

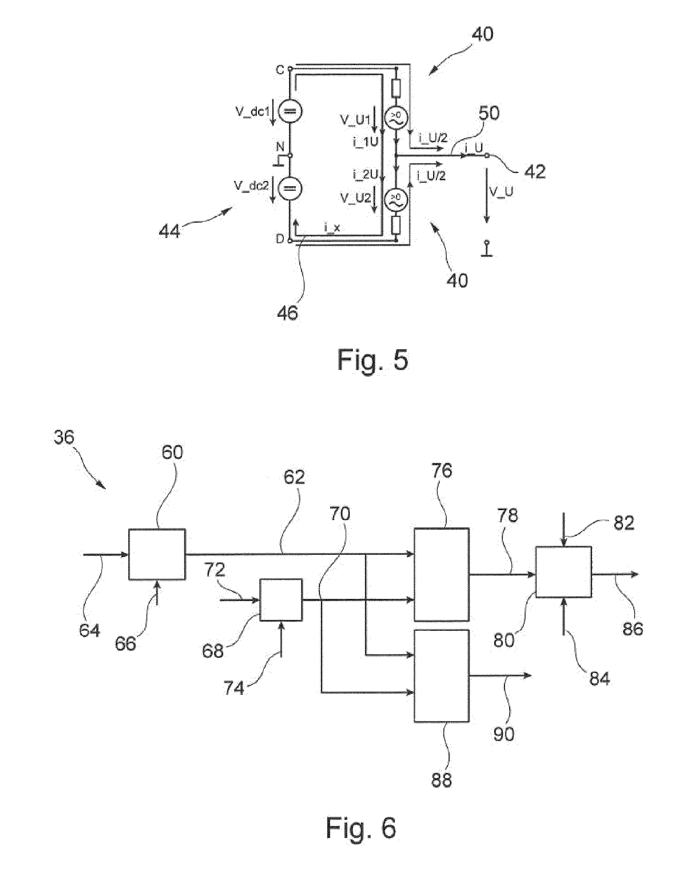

In Fig. 5 two branches 40 connected to the same output phase 42 of one of the converters 10 of Fig. 1 or 3 are shown. The other phase units 22 or branches 24 are summarized with the symbols 44 at the left side of the diagram. For example, the branches 40 may be two branches 24 of one phase unit 22 of Fig. 1 or may be two branches 24 connected to the same output 18.

The branches 40 and the other branches 44 form a loop through which a circulating current 46 may flow.

Contrary to a conventional converter, which only has an electrical energy storage in the DC link, an ML2C converter 10 has a plurality of energy storages Cc that are distributed along the branches 24. Due to the switching of the elementary cells 26, electric energy may be stored in each of the capacitors Cc and released from the capacitors Cc. The electric energy may be moved between the elementary cells 26 and between the branches 24. This shift of energy may be controlled by the controller 36 without changing the phase current 50. For this purpose circulating current 46 is used.

Fig. 6 shows a functional diagram of the controller 36. The controller 36 comprises a power module thermal model 60, which is adapted to estimate the temperature 62 of the semiconductor switches S1 to S4 and/or the power module 28. The estimation may be based on n heat sink temperature 64 measured by the sensor 34 and/or an ambient temperature 66 measured by the sensor 35.

The controller 36 further comprises a target temperature module 68 that may estimate a target temperature 70 for the semiconductor switches S1 to S4 and/or the power module 28. The estimation of the target temperature 70 may be based on the actual remaining lifetime 74 of the power module 28 and/or the actual load 72 on the converter 10. The lifetime 74 of the power modules 28 may depend on the number of heating and/or cooling cycles the respective power module 28 has passed through. For example, when the lifetime 74 of a power module 28 reaches its maximum lifetime, but the next maintenance of the converter with an exchange of the power module 28 is still a specific time period away, the real lifetime of the power module 28 may be extended by reducing the temperature variations inside the power module 28. It may be possible that at the beginning of the lifetime of a power module 28, the temperature variations may be bigger (and the target temperature in an idle state may be set lower) and that at the end of the lifetime of a power module 28, the temperature variations will be set smaller (and the target temperature in an idle state may be set higher).

The target temperature module 68 may use a lookup table in which target temperatures are stored in association with loads on the converter 10.

The actual temperature 62 and the target temperature 70 are input to a circulating current module 76 which determines or estimates a circulating current reference 78 based on these two temperatures. For example, the module 76 may determine the amplitude 78 of the circulating current 46 based on a heating time and the difference between the temperatures 62, 70.

The circulating current reference 78 is input to a branch current controller 80, which together with a branch current reference from other controllers 82 and the measured branch current 84 generates the commands 86 for switching the semiconductor switches S1 to S4.

The actual temperature 62 and the target temperature 70 may be input to an optional cooling device control module 88, which controls the cooling capability of the cooling device 32. For example, if the cooling device 32 comprises a fan, the module 88 may generate a fan speed reference 90. If the cooling device 32 comprises a pump, the module 88 may generate a pump speed reference 90. If the target temperature 70 is lower than the actual temperature 62, the cooling device control module 88 may decide to turn on the cooling device 32 to cool down the power modules 28. Furthermore, based on the two temperatures 62, 70, the cooling device controller module 88 may determine, if the cooling device 32 may be slowed down or turned off to prevent a further cooling down of the power module 28, when the actual temperature 62 has fallen below the target temperature 70.

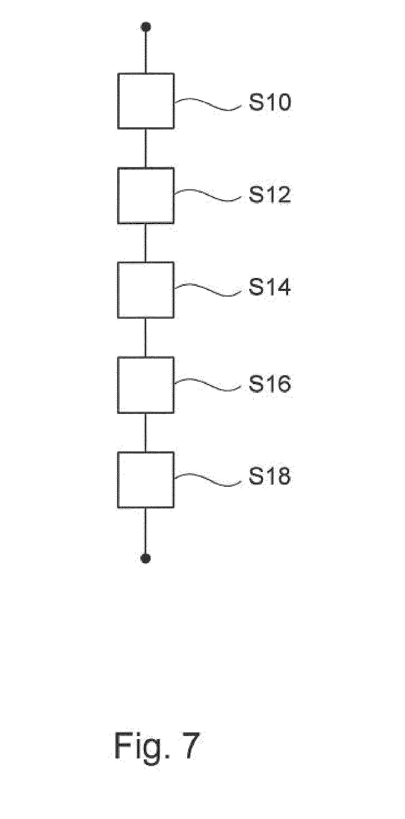

Fig. 7 shows a flow diagram for a method for controlling the inverter 10, which may be executed by the controller 36.

In step S10, an actual temperature for the power modules of the converter branch 22, 40 is estimated.

For example, the actual temperature 62 may be estimated based on the measurement of the temperature sensor 34. When the converter 10 is in an idle state and has not been heated for a predetermined time, the actual temperature may be set to an ambient temperature of the converter 10. In this case, the actual temperature may be set to a predefined temperature, for example to 20° C.

In step S12, a target temperature 70 for the power modules of the converter branch 24 is determined.

For example, the target temperature 70 may be smaller than actual temperature 62. So, the controller 36 is not acting. On the other hand, the target temperature 70 may be higher (for example the target temperature may be 80°C and the actual temperature 62 may be 40°C). Then, the power modules 28 are heated in the idle state.

In step S14, when the target temperature 70 is higher than the actual temperature 62, the power modules 28 may be heated by slowing down cooling medium circulation with a cooling device 32.

In step S16, the amplitude of a circulating current 46 for heating the power modules 28 is determined. In the simplest case, the amplitude may be set to a predefined value and the heating may be stopped, when the actual temperature reaches the target temperature.

As another possibility, the amplitude of the circulating current 46 may be determined based on the actual temperature 62, the target temperature 70 and, for example, a time period for the heating.

In step S18, the power modules 26 are controlled, such that an input current at the input 16 is converted into an output current at the output 20 and such that a circulating current 64 flowing through a converter branch 24, 40 and returning through another converter 24, 44 branch is generated without influencing the output current.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for controlling an electrical converter (10),
the converter comprising at least two converter branches (24) connecting an input (16) of the converter with an output (20) of the converter (20);
each converter branch (24) comprising a plurality of power modules (28) connected in series, each power module (28) comprising at least two power semiconductor switches (S1, S2) connected in series and a capacitor (Cc) connected in parallel to the power semiconductor switches;
wherein the method comprises the steps of:
controlling the power modules (28), such that an input current at the input is converted into an output current (50) at the output;
controlling the power modules (28) such that a circulating current (46) flowing through a converter branch (22) and returning through another converter branch (22) is generated;
determining a target temperature of the power modules (28) of a converter branch (22);
wherein the circulating current is controlled such that the power modules (28) of the converter branch are heated with the circulating current (46) to the target temperature.

2. The method of claim 1, further comprising the step of:
estimating an actual temperature of the power modules (28) of the converter branch;
wherein the circulating current is controlled such that the power modules (28) of the converter branch are heated from the estimated temperature to the target temperature.

3. The method of claim 2,
wherein the actual temperature is estimated with a sensor (34) in a power module.

4. The method of one of the preceding claims,
wherein the actual temperature of the power semiconductors is estimated based on a thermal model (60) of the power modules.

5. The method of one of the preceding claims,
wherein an amplitude and/or an frequency of the circulating current (46) is controlled.

6. The method of one of the preceding claims,
wherein the power modules (28) are heated in an idle state of the converter (10).

7. The method of one of the preceding claims,
wherein the power modules (28) are heated more than 50° C.

8. The method of one of the preceding claims,
wherein the heating of the power modules (28) is controlled in an operating state of the converter, such that temperature variations of an actual temperature of the power modules (28) are smaller than a predefined temperature difference.

9. The method of one of the preceding claims, further comprising the step of:
controlling a cooling device (32) of the converter (10) based on the target temperature.

10. The method of claim 11,
wherein the cooling device comprises a fan (32) and/or a pump.

11. A computer program for controlling a converter (10), which, when being executed by a processor, is adapted to carry out the steps of the method of one of claims 1 to 10.

12. A computer-readable medium in which a computer program according to claim 11 is stored.

13. A controller (36) for a converter (10), wherein the controller is adapted for carrying out the method of one of claims 1 to 10.

14. An electrical converter (10) for converting an input current into an output current, the converter comprising:
at least two converter branches (24) connecting an input (16) of the converter with an output (20) of the converter; each converter branch (22) comprising a plurality of power modules (28) connected in series, each power module (28) comprising at least two power semiconductor switches (S1, S2) connected in series and a capacitor (Cc) connected in parallel to the power semiconductor switches;
a controller (36) according to claim 13.
